# EUROPEAN PATENT APPLICATION

(11) **EP 4 664 899 A1**
(43) Date of publication of application: **17.12.2025**
(21) Application number: 24752870.6
(22) Date of filing: 06.02.2024
(51) Int. Cl.: H04N 21/435

(54) **VIDEO BULLET-SCREEN CONTROL METHOD, AND DEVICE AND STORAGE MEDIUM**

(30) Priority: 06.02.2023 CN 202310125215
(71) Applicant: Beijing Zitiao Network Technology Co., Ltd., Beijing 100190 (CN)
(72) Inventor: FEI, Didannuo, Beijing 100028 (CN); SONG, Shaohua, Beijing 100028 (CN)
(74) Representative: Isarpatent
(86) International application number: PCT/CN2024/076302
(87) International publication number: WO 2024/165015

(57) **Abstract**

Provided in the embodiments of the present disclosure are a video bullet-screen control method, and a device and a storage medium. The method comprises: in response to a video pause instruction, controlling a video to pause, and displaying a bullet-screen release entry control in a video playing interface; and in response to a trigger instruction for the bullet-screen release entry control, displaying a bullet-screen input interface, wherein the bullet-screen input interface is used for inputting bullet-screen content. When the video is paused, the bullet-screen release entry control is displayed in the video playing interface, which does not affect the experience of a user viewing the video, and at this time, the bullet-screen release entry control is triggered to release a bullet screen, such that the released bullet screen can accurately match the currently paused video picture, and the user has enough time to edit bullet-screen content, thereby improving the experience of the user when releasing the bullet screen.

## Description

The present application claims the priority of the Chinese Patent Application No. 202310125215.5 filed on February 6, 2023, whose disclosure content is incorporated herein by reference in its entirety and constitutes a part of the present application.

### TECHNICAL FIELD

The embodiments of the present disclosure relate to a method for controlling video dynamic comment, a device, and a storage medium.

### BACKGROUND

Dynamic comments refer to commentary subtitles that pop up during watching a video on the internet. It can give users a sense of real-time interaction during watching the video, where they can discuss and communicate the video content, and also see views on the video content from other users, thereby increasing participation, vibe, and sense of identity of users. The dynamic comments have been recognized and loved by more and more users, whether on the traditional video playing platform or the live broadcast platform.

In the prior art, a dynamic comment function switch and a dynamic comment input box are usually provided on the video playback interface, where users may control the enabling and disabling of a dynamic comment function through the dynamic comment function switch, and can input and publish a dynamic comment through the dynamic comment input box when the dynamic comment function is enabled. However, the existing dynamic comment interaction scheme cannot satisfy the needs of users and affects the user experience.

### SUMMARY

The embodiments of the present disclosure provide a method for controlling video dynamic comment, a device, and a storage medium, thereby improving experience of dynamic comment interaction and video viewing.

In a first aspect, an embodiment of the present disclosure provides a method for controlling video dynamic comment, including:
in response to a video pause instruction, pausing a video, and displaying a dynamic comment publishing entrance control on a video playback interface;
displaying a dynamic comment input interface in response to a trigger instruction for the dynamic comment publishing entrance control, wherein the dynamic comment input interface is configured for inputting content of a dynamic comment.

In a second aspect, an embodiment of the present disclosure provides an apparatus for controlling video dynamic comment, including:
a playback control unit configured to, in response to a video pause instruction, pause a video, and display a dynamic comment publishing entrance control on a video playback interface;
a dynamic comment control unit configured to, display a dynamic comment input interface in response to a trigger instruction for the dynamic comment publishing entrance control, wherein the dynamic comment input interface is configured for inputting content of a dynamic comment.

In a third aspect, an embodiment of the present disclosure provides an electronic device including at least one processor and a memory;

The memory store instructions execute by that computer;
the memory stores a computer executable instruction; and
the at least one processor executes the computer executable instruction stored in the memory, such that the at least one processor implements the method for controlling video dynamic comment as described in the first aspect and various possible designs of the first aspect.

In a fourth aspect, an embodiment of the present disclosure provides a computer-readable storage medium with a computer executable instruction stored thereon, wherein the computer executable instruction, when being executed by a processor, implements the method for controlling video dynamic comment as described in the first aspect and various possible designs of the first aspect.

In a fifth aspect, an embodiment of the present disclosure provides a computer program product a computer executable instruction, wherein the computer executable instruction, when being executed by a processor, implements the method for controlling video dynamic comment as described in the first aspect and various possible designs of the first aspect.

### BRIEF DESCRIPTION OF DRAWINGS

In order to explain the embodiments of the present disclosure or the technical scheme in the prior art more clearly, the accompany drawings needed in the description of the embodiments or the prior art will be briefly introduced below. Obviously, the accompany drawings in the following description are some embodiments of the present disclosure, and other drawings can be obtained according to these drawings without creative labor.
Fig. 1a to Fig. 1d are example diagrams showing interface changes for a method for controlling video dynamic comment provided in an embodiment of the present disclosure;
Fig. 2 is a schematic flow chart of a method for controlling video dynamic comment provided in an embodiment of the present disclosure;
Fig. 3 is a schematic flow chart of a method for controlling video dynamic comment provided in another embodiment of the present disclosure;
Fig. 4 is an example diagram showing interface changes for a method for controlling video dynamic comment provided in another embodiment of the present disclosure;
Fig. 5 is an example diagram showing an interface for a method for controlling video dynamic comment provided in another embodiment of the present disclosure;
Fig. 6 is an example diagram showing an interface for a method for controlling video dynamic comment provided in another embodiment of the present disclosure;
Fig. 7 is a flow chart of a method for controlling video dynamic comment provided in another embodiment of the present disclosure;
Fig. 8 is a structural block diagram of an apparatus for controlling video dynamic comment provided in an embodiment of the present disclosure; and
Fig. 9 is a hardware structural schematic diagram of an electronic device provided in an embodiment of the present disclosure.

### DETAILED DESCRIPTION

In order to make the purpose, technical scheme and advantages of the embodiment of the disclosure clearer, the technical scheme in the embodiments of the disclosure will be described clearly and completely with the accompany drawings. Obviously, the described embodiments are partial of the embodiments of the disclosure, but not all the embodiments. Based on the embodiments in this disclosure, all other embodiments obtained by ordinary technicians in this field without creative labor belong to the protection scope of this disclosure.

In the prior art, a dynamic comment function switch and a dynamic comment input box are usually configured on a video playback interface. Users may control the enabling and disabling of a dynamic comment function through the dynamic comment function switch, and can input and publish a dynamic comment through the dynamic comment input box when the dynamic comment function is enabled. However, the dynamic comment function switch and the dynamic comment input box in the prior art are typically displayed on the video playback interface, which is already configured with many modules and components, especially for the feed-based video playback interface that is provided with a comment control, a like control, a favorite control, a forwarding control and a video information display area, or the like. The dynamic comment function switch and the dynamic comment input box would further increase the complexity of the video playback interface, especially for the feed-based video playback interface, which increases the cost and affects the playback smoothness, and also blocks the video content to a certain degree, affecting experience of users during watching the video

**In** order to solve the technical problems above, the present disclosure provides a method for controlling video dynamic comment to satisfy the needs of users to send a dynamic comment without increasing the complexity of the video playback interface and covering the video content during video playback. Therefore, the present disclosure does not display a dynamic comment publishing entrance control on the video playback interface when the dynamic comment function is enabled during playing the video. Instead, the present disclosure displays the dynamic comment publishing entrance control on the video playback interface when the video is paused, which does affect experience of users in watching the video, allows the user to publish a dynamic comment by triggering the dynamic comment publishing entrance control such that the published dynamic comment may accurately match the currently paused video screen (to avoid publishing the dynamic comment without pausing the video playback, which brings a time lag of the actual publish of the dynamic comment, leading to mismatch between the dynamic comment and the video screen), and allows the user to have sufficient time to edit the content of the dynamic comment, improving the experience of users in publishing the dynamic comment.

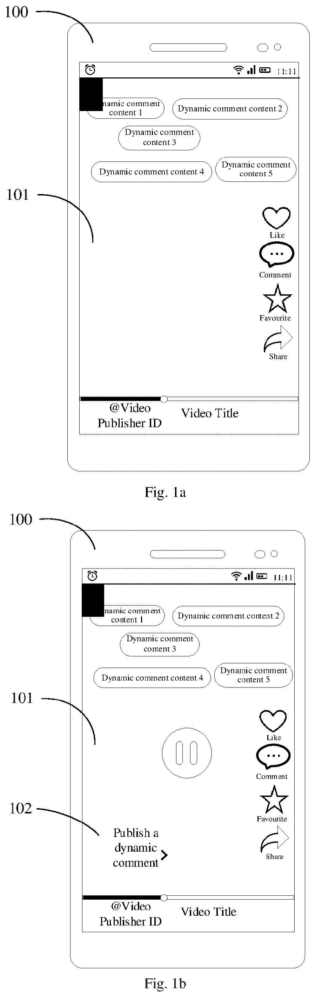

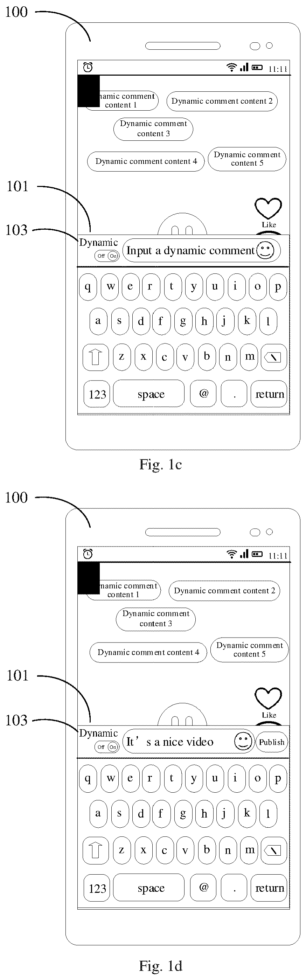

The present disclosure provides a method for controlling video dynamic comment that is applied to a terminal device 100, wherein the terminal device 100 includes, but is not limited to, a mobile phone, a tablet, a wearable device, and another electronic device capable of playing a video. As shown in Fig. 1a, a dynamic comment publishing entrance control 102 is not displayed on a video playback interface 101 when a dynamic comment function is enabled during playing a video. In response to a video pause instruction, as shown in Fig. 1b, the video is controlled to pause playing, and the dynamic comment publishing entrance control 102 is displayed on the video playback interface 101. In response to a trigger instruction to the dynamic comment publishing entrance control 102, as shown in Fig. 1c, a dynamic comment input interface 103 is displayed. The dynamic comment input interface 103 may include, but is not limited to, a dynamic comment content input box, a keyboard, or the like. After the dynamic comment content input box is clicked, or after content of a dynamic comment is input in the dynamic comment content input box, a dynamic comment publish control may be displayed on the dynamic comment input interface 103. The user may input content of a dynamic comment through the dynamic comment input interface 103 and trigger the dynamic comment publish control to publish the dynamic comment. Furthermore, the dynamic comment published by the user is displayed in the dynamic comment display region on the video playback interface 101, and the dynamic comment input interface 103 may be closed simultaneously. In addition, the dynamic comment input interface 103 may also include a dynamic comment function switch control for enabling or disabling the dynamic comment function. In the present disclosure, the video playback interface 101 may be a landscape video playback interface or a portrait video playback interface.

The following describes the method for controlling video dynamic comment in the present disclosure in detail with reference to specific embodiments.

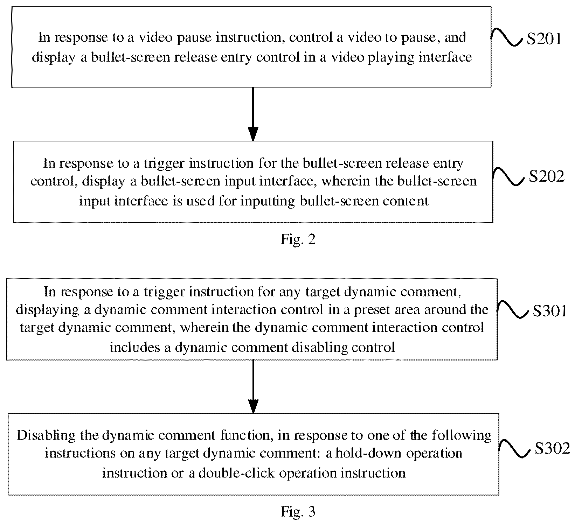

Referring to Fig. 2, Fig. 2 is a schematic flow chart of a method for controlling video dynamic comment provided in an embodiment of the present disclosure. The method in the present embodiment may be applied to a terminal device, and the method for controlling video dynamic comment includes:
S201: in response to a video pause instruction, pausing a video and displaying a dynamic comment publishing entrance control on a video playback interface.

In the present embodiment, when a dynamic comment function is enabled during playing a video, a dynamic comment may be displayed on the video playback interface, but the dynamic comment publishing entrance control is not displayed on the video playback interface during playing the video. When a user pause playing the video, in response to the video pause instruction, the dynamic comment publishing entrance control is displayed on the video playback interface, wherein the dynamic comment publishing entrance control may be configured as an entrance to a dynamic comment input interface. The dynamic comment input interface may be displayed by triggering the dynamic comment publishing entrance control, and the user may input and publish a dynamic comment. Optionally, the dynamic comment publishing entrance control may be displayed anywhere on the video playback interface, for example, in the left area of the video playback interface.

In the present embodiment, during playing the video, the dynamic comment publishing entrance control is not displayed on the video playback interface, and instead, the dynamic comment publishing entrance control is displayed on the video playback interface when the video is paused. This is because the video playback interface is already configured with many modules and components, especially for a feed-based video playback interface which is configured with a comment control, a like control, a favorite control, a forwarding control and a video information display area, or the like. If the dynamic comment publishing entrance control is added on the video playback interface during playing the video, the complexity of the video playback interface will be increased, especially for the feed-based video playback interface, which increases the cost and affects the playback smoothness, and also blocks the video content to a certain extent, affecting experience of users in watching the video. Therefore, the dynamic comment publishing entrance control is not displayed on the video playback interface during playing the video. Instead, the dynamic comment publishing entrance control is displayed on the video playback interface when the video is paused, which does affect experience of users in watching the video, allows the user to publish a dynamic comment by triggering the dynamic comment publishing entrance control such that the published dynamic comment may accurately match the currently paused video screen (to avoid publishing the dynamic comment without pausing the video playback, which brings a time lag of the actual publish of the dynamic comment, leading to mismatch between the dynamic comment and the video screen), and allows the user to have sufficient time to edit the content of the dynamic comment, improving the experience of user in publishing the dynamic comment.

Optionally, the dynamic comment function may be normally enabled, that is, the dynamic comment function cannot be disabled, and the dynamic comment may be displayed on the video playback interface continuously. Alternatively, the dynamic comment function may also be freely switched on/off, such that when the dynamic comment function is enabled during playing a video, the dynamic comment is displayed on the video playback interface. In this state, in response to the video pause instruction, the video is controlled to pause, and the dynamic comment publishing entrance control is displayed on the video playback interface. When the dynamic comment function is disabled during playing the video, the dynamic comment is not displayed on the video playback interface, and in response to the video pause instruction, the video is controlled to pause. In this state, the dynamic comment publishing entrance control is not displayed on the video playback interface.

S202: displaying a dynamic comment input interface in response to a trigger instruction for the dynamic comment publishing entrance control, wherein the dynamic comment input interface is configured for inputting content of a dynamic comment.

In the present embodiment, when a user needs to publish a dynamic comment, the user may trigger the dynamic comment publishing entrance control, and in response to the trigger instruction for the dynamic comment publishing entrance control, a dynamic comment input interface is displayed. Optionally, the dynamic comment input interface may include, but is not limited to, a dynamic comment input box, a keyboard, a dynamic comment publish control, or the like. The user may input a dynamic comment through the dynamic comment input interface and trigger the dynamic comment publish control to publish the dynamic comment. Then, the dynamic comment published by the user is displayed in a dynamic comment display area on the video playback interface, and the dynamic comment input interface may be closed at the same time. The dynamic comment input interface may be displayed simultaneously with the video playback interface. Specifically, it may be a panel displayed on the video playback interface or a pop-up window displayed on the video playback interface. In addition, when the dynamic comment input interface is displayed, the video playback interface is also hidden.

The method for controlling video dynamic comment provided in the present disclosure controls the video to pause in response to the video pause instruction, and displays the dynamic comment publishing entrance control on the video playback interface; and displays the dynamic comment input interface in response to the trigger instruction for the dynamic comment publishing entrance control, wherein the dynamic comment input interface is configured for inputting content of a dynamic comment. Due to the dynamic comment publishing entrance control is displayed when the video is paused, experience of users in watching the video is not affected. In addition, the dynamic comment publishing entrance control is triggered to publish a dynamic comment in this state, which makes the published dynamic comment accurately matched with the currently paused video screen, and allows the user to have sufficient time to edit the content of the dynamic comment, improving experience of the user in publishing the dynamic comment.

Based on the embodiment above, the method for controlling video dynamic comment further includes:
in response to a video playback instruction, playing the video, and hiding the dynamic comment publishing entrance control on the video playback interface.

In the present embodiment, due to the dynamic comment publishing entrance control is not displayed on the video playback interface during playing the video, but the dynamic comment publishing entrance control is displayed on the video playback interface when the video is paused, in response to that the video is played again after the video is paused, the dynamic comment publishing entrance control is hidden on the video playback interface, that is, the dynamic comment publishing entrance control is no longer displayed, and the video playback interface returns to the state shown in Fig. 1a. Alternatively, when the video is started in response to the video playback instruction, the dynamic comment publishing entrance control is also not displayed on the video playback interface. The steps of the present embodiment may be performed after the video is paused of the embodiment above, or may be performed before the video is paused. By not displaying the dynamic comment publishing entrance control during playing the video, the complexity of the video playback interface may be reduced, which avoids blocking the video content by the dynamic comment publishing entrance control, and avoids affecting experience of the user in watching the video.

Based on any of the above embodiments, when the dynamic comment function is enabled, the user may also disable the dynamic comment function, that is, all dynamic comments are not displayed.

In an optional embodiment, as shown in Fig. 3, a process for disabling the dynamic comment function may include:
S301: in response to a trigger instruction for any target dynamic comment, displaying a dynamic comment interaction control in a preset area around the target dynamic comment, wherein the dynamic comment interaction control includes a dynamic comment disabling control; and
S302: disabling the dynamic comment function, in response to one of the following instructions on any target dynamic comment: a hold-down operation instruction or a double-click operation instruction.

In the present embodiment, regardless of whether the video is paused, the user may trigger any target dynamic comment in the dynamic comment display area on the video playback interface, for example, clicking the target dynamic comment. If the target dynamic comment is scrolling, when the user clicks the target dynamic comment, the target dynamic comment may be controlled to stop scrolling.

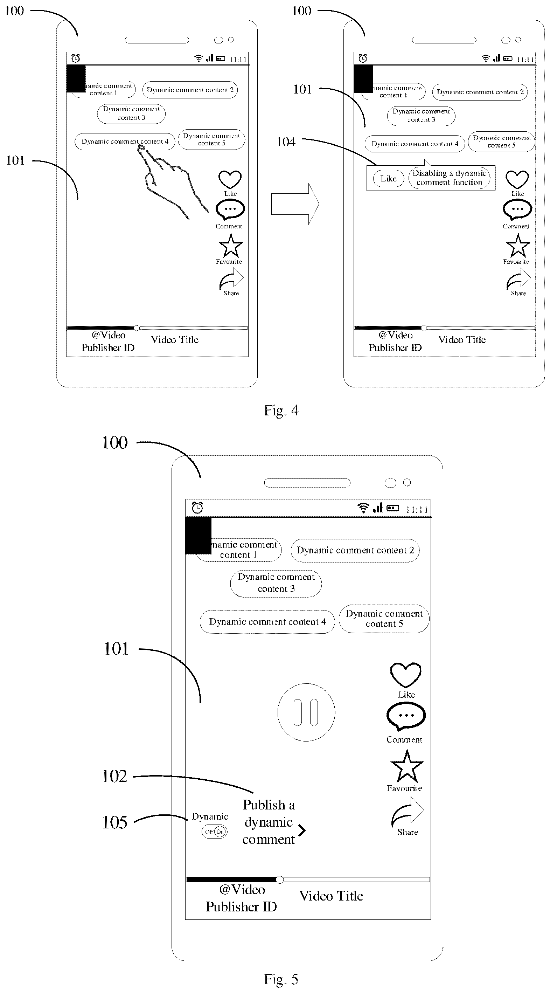

As shown in Fig. 4, after the target dynamic comment is triggered, the dynamic comment interaction control 104 may be displayed in the preset area around the target dynamic comment (for example, below the target dynamic comment). The dynamic comment interaction control 104 may include a dynamic comment disabling control configured for disabling the dynamic comment function, and the user may disable the dynamic comment by triggering the dynamic comment disabling control in the dynamic comment interaction control 104. In the present embodiment, the dynamic comment disabling control may not be kept displaying on the video playback interface, which also reduces the complexity of the video playback interface, so as to avoid blocking the video content by the dynamic comment disabling control. Instead, the dynamic comment disabling control is only displayed in the dynamic comment interaction control after the user clicks any dynamic comment, which satisfies the needs of the user to close the dynamic comment function at any time.

Of course, the dynamic comment interaction control may also include other controls, such as a like control and the like. The like control may be used to like a target dynamic comment. The dynamic comment interaction control is configured for interacting with a dynamic comment.

Optionally, the dynamic comment interaction control may also include a dynamic comment blocking control, the dynamic comment blocking control is configured to block a current target dynamic comment. After the user clicks the dynamic comment blocking control, in response to a trigger instruction for the dynamic comment blocking control, the target dynamic comment is hidden, but dynamic comments other than the target screen comment are not hidden. That is, other dynamic comments are displayed normally, thereby only blocking a single dynamic comment. Alternatively, the dynamic comment blocking control may also be configured to block all dynamic comments that are the same as the target dynamic comment, or all dynamic comments published by the publisher of the target dynamic comment, or the like, which will not be described again here.

In another optional embodiment, a process for disabling the dynamic comment function may specifically include:
disabling the dynamic comment function, in response to one of the following instructions on any target dynamic comment: a hold-down operation instruction or a double-click operation instruction.

In the present embodiment, regardless of whether the video is paused, the user may issue a hold-down operation instruction or a double-click operation instruction for any target dynamic comment in the dynamic comment display area on the video playback interface, and in response to the hold-down operation instruction or the double-click operation instruction for the target dynamic comment, the dynamic comment function may be disabled. This provides a simpler and easier operation for disabling the dynamic comment function.

If the target dynamic comment is scrolling, when the user holds down or double clicks the target dynamic comment, the target dynamic comment may be controlled to stop scrolling, which is convenient for the user to operate. Optionally, after the user clicks the target dynamic comment and the dynamic comment interaction control is displayed in the preset area around the target dynamic comment, the user may hold down or double click the target dynamic comment, and in response to the hold-down operation instruction or the double-click operation instruction on the target dynamic comment, the dynamic comment function may be disabled. In this case, the dynamic comment disabling control may not be included in the dynamic comment interaction control, which avoids occupying the area of the dynamic comment interaction control, such that the dynamic comment interaction control may support more other functions.

In another optional embodiment, after the video is paused, as shown in Fig. 5, both the dynamic comment publishing entrance control 102 and a first dynamic comment function switch control 105 are displayed on the video playback interface 101 (the terms "first", "second", and the like in the present disclosure are only used for illustration purposes and cannot be understood as indicating or implying relative importance or implying the number of technical features indicated). The process for disabling the dynamic comment function may specifically include: in response to a trigger instruction to the first dynamic comment function switch control 105, disabling the dynamic comment function. That is, after the video is paused, the user may disable the dynamic comment function by triggering the first dynamic comment function switch control 105 displayed on the video playback interface 101. Optionally, in response to the video playback instruction, the first dynamic comment function switch control may also be hidden on the video playback interface.

In another optional embodiment, a process for disabling the dynamic comment function may specifically include:
in response to a hold-down operation instruction on the video playback interface, displaying a setting interface on the video playback interface, where the setting interface includes a second dynamic comment function switch control; and
in response to a trigger instruction for the second dynamic comment function switch control, disabling the dynamic comment function.

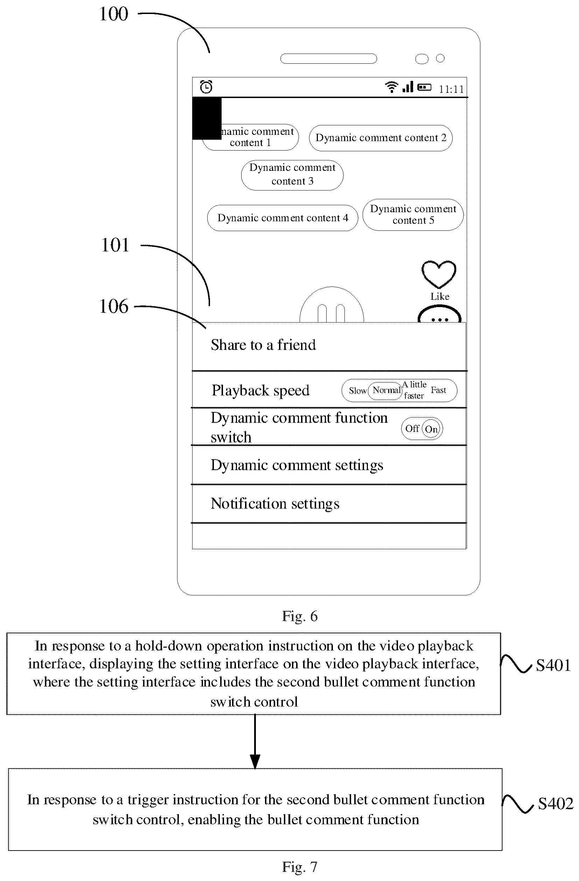

In the present embodiment, when playing the video and/or the video is paused, the user may hold down on the video playback interface, and in response to the hold-down operation instruction, the setting interface is displayed on the video playback interface. As shown in Fig. 6, the setting interface 106 includes the second dynamic comment function switch control, and may include but is not limited to a sharing control, a playback speed setting control and the like. The user may disable the dynamic comment function by triggering the second dynamic comment function switch control on the setting interface.

In another optional embodiment, the dynamic comment input interface includes a third dynamic comment function switch control, and the process for disabling the dynamic comment function may specifically include: in response to a trigger instruction to the third dynamic comment function switch control in the dynamic comment input interface, disabling the dynamic comment function. That is, after the user triggers the dynamic comment publishing entrance control and the dynamic comment input interface is displayed, the dynamic comment function may be disabled by triggering the third dynamic comment function switch control on the dynamic comment input interface.

Based on any of the above embodiments, after the dynamic comment function is disabled, the dynamic comment function may also be enabled again, as shown in Fig. 7, and the specific process may include:
S401: in response to a hold-down operation instruction on the video playback interface, displaying the setting interface on the video playback interface, where the setting interface includes the second dynamic comment function switch control; and
S402: in response to a trigger instruction for the second dynamic comment function switch control, enabling the dynamic comment function.

In the present embodiment, after the dynamic comment function is disabled, during playing the video and/or the video is paused, the user may hold down on the video playback interface, and in response to the hold-down operation instruction, the setting interface is displayed on the video playback interface. As shown in Fig. 6, the setting interface 106 includes the second dynamic comment function switch control. The user may enable the dynamic comment function by triggering the second dynamic comment function switch control on the setting interface 106. In the present embodiment, after the dynamic comment function is disabled, the dynamic comment function switch may not be kept displaying on the video playback interface, which reduces the complexity of the video playback interface, and also avoids blocking the video content by the dynamic comment function switch. The second dynamic comment function switch control is only set on the setting interface displayed after the hold-down operation on the video playback interface, which may satisfy the demand of the user for enabling the dynamic comment function at any time.

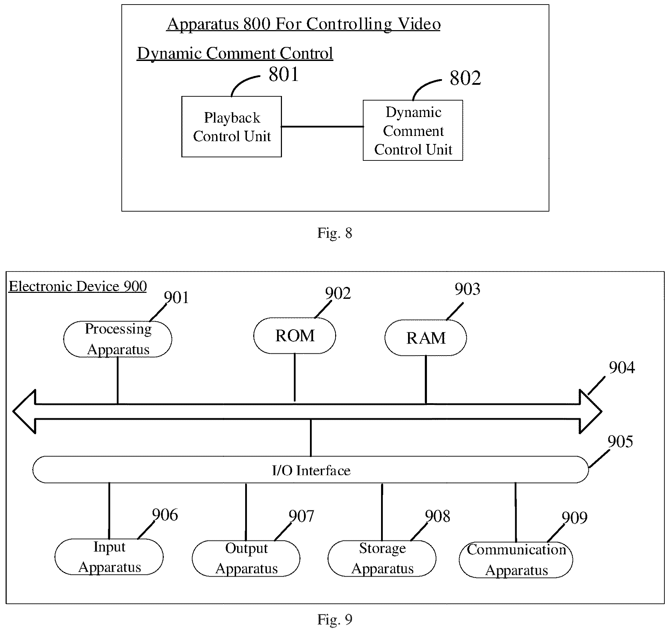

Corresponding to the method for controlling video dynamic comment in the embodiments above, Fig. 8 is a block diagram of an apparatus for controlling video dynamic comment provided in an embodiment of the present disclosure. For illustrative purposes, only those parts relevant to the embodiments of the present disclosure are shown. With reference to Fig. 8, the apparatus 800 for controlling video dynamic comment includes: a playback control unit 801 and a dynamic comment control unit 802.

The playback control unit 801 is configured to, in response to a video pause instruction, pause a video, and display a dynamic comment publishing entrance control on a video playback interface;

The dynamic comment control unit 802 is configured to, in response to a trigger instruction for the dynamic comment publishing entrance control, display a dynamic comment input interface, wherein the dynamic comment input interface is configured for inputting content of a dynamic comment.

In one or more embodiments of the present disclosure, the playback control unit 801 is further configured to:
in response to a video playback instruction, play the video, and hide the dynamic comment publishing entrance control on the video playback interface.

In one or more embodiments of the present disclosure, when in response to a video pause instruction, controlling a video to pause, and displaying a dynamic comment publishing entrance control in a video playback interface, the playback control unit 801 is configured to:
in response to the video pause instruction and a dynamic comment function being enabled during playing the video, pause the video and display the dynamic comment publishing entrance control on the video playback interface.

In one or more embodiments of the present disclosure, the dynamic comment control unit 802 is further configured to:
in response to a trigger instruction for any target dynamic comment, display a dynamic comment interaction control in a preset area around the target dynamic comment, wherein the dynamic comment interaction control includes a dynamic comment disabling control; and
disable the dynamic comment function in response to a trigger instruction for the dynamic comment disabling control.

In one or more embodiments of the present disclosure, the dynamic comment interaction control further includes a dynamic comment blocking control; and the dynamic comment control unit 802 is further configured to:
in response to a trigger instruction for the dynamic comment blocking control, hide the target dynamic comment.

In one or more embodiments of the present disclosure, the dynamic comment control unit 802 is further configured to:
disable the dynamic comment function, in response to one of the following instructions on any target dynamic comment: a hold-down operation instruction or a double-click operation instruction.

In one or more embodiments of the present disclosure, after controlling the video to pause, the playback control unit 801 is further configured to display the first dynamic comment function switch control on the video playback interface;
the dynamic comment control unit 802 is further configured to, in response to a trigger instruction for the first dynamic comment function switch control, disable the dynamic comment function.

In one or more embodiments of the present disclosure, after disabling the dynamic comment function, the dynamic comment control unit 802 is further configured to:
in response to a hold-down operation instruction on the video playback interface, display a setting interface on the video playback interface, where the setting interface includes a second dynamic comment function switch control; and
in response to a trigger instruction for the second dynamic comment function switch control, enable the dynamic comment function.

The device provided in this embodiment can be used to implement the technical solution of the above method embodiments, with the same implementation principle and technical effect, which are not described again in this embodiment.

Referring to Fig. 9, Fig. 9 illustrates a schematic structural diagram of an electronic device 900 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 9 is merely an example, and should not pose any limitation to the functions and the range of use of the embodiments of the present disclosure.

As illustrated in Fig. 9, the electronic device 900 may include a processing apparatus 901 (e.g., a central processing unit, a graphics processing unit, etc.), which can perform various suitable actions and processing according to a program stored in a read-only memory (ROM) 902 or a program loaded from a storage apparatus 908 into a random-access memory (RAM) 903. The RAM 903 further stores various programs and data required for operations of the electronic device 900. The processing apparatus 901, the ROM 902, and the RAM 903 are interconnected by means of a bus 904. An input/output (I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, a gyroscope, or the like; an output apparatus 907 including, for example, a liquid crystal display (LCD), a loudspeaker, a vibrator, or the like; a storage apparatus 908 including, for example, a magnetic tape, a hard disk, or the like; and a communication apparatus 909. The communication apparatus 909 may allow the electronic device 900 to be in wireless or wired communication with other devices to exchange data. While Fig. 9 illustrates the electronic device 900 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 909 and installed, or may be installed from the storage apparatus 908, or may be installed from the ROM 902. When the computer program is executed by the processing apparatus 901, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. **In** the present disclosure, the computer-readable storage medium may be any tangible medium containing or storing a program that can be used by or in combination with an instruction execution system, apparatus or device. **In** the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to perform the method as described in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquisition unit can also be described as "a unit that acquires at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that the user information (including but not limited to user equipment information, user personal information, etc.) and data (including but not limited to data for analysis, stored data, displayed data, etc.) involved in this disclosure are all information and data authorized by users or fully authorized by all parties, and the collection, use and processing of relevant data need to comply with relevant laws, regulations and standards of relevant countries and regions, and corresponding operation portals are provided for users to choose authorization or rejection.

In a first aspect, according to one or more embodiments of the present disclosure, a method for controlling a dynamic comment is provided, and the method includes:
in response to a video pause instruction, pausing a video, and displaying a dynamic comment publishing entrance control on a video playback interface;
displaying a dynamic comment input interface in response to a trigger instruction for the dynamic comment publishing entrance control, wherein the dynamic comment input interface is configured for inputting content of a dynamic comment.

According to one or more embodiments of the present disclosure, the method further includes:
in response to a video playback instruction, playing the video, and hiding the dynamic comment publishing entrance control on the video playback interface.

According to one or more embodiments of the present disclosure, the in response to a video pause instruction, pausing a video, and displaying a dynamic comment publishing entrance control on a video playback interface includes:
in response to the video pause instruction and a dynamic comment function being enabled during playing the video, pausing the video and displaying the dynamic comment publishing entrance control on the video playback interface.

According to one or more embodiments of the present disclosure, the method further includes:
in response to a trigger instruction for any target dynamic comment, displaying a dynamic comment interaction control in a preset area around the target dynamic comment, wherein the dynamic comment interaction control includes a dynamic comment disabling control; and
in response to a trigger instruction for the dynamic comment disabling control, disabling the dynamic comment function.

In one or more embodiments of the present disclosure, a dynamic comment blocking control is also included in the dynamic comment interaction control; and the method further includes:
in response to a trigger instruction for the dynamic comment blocking control, hiding the target dynamic comment.

According to one or more embodiments of the present disclosure, the method further includes:
disabling a dynamic comment function, in response to one of the following instructions on any target dynamic comment: a hold-down operation instruction or a double-click operation instruction.

According to one or more embodiments of the present disclosure, after the pausing the video, the method further includes:
displaying a first dynamic comment function switch control on the video playback interface;
in response to a trigger instruction for the first dynamic comment function switch control, disabling a dynamic comment function.

According to one or more embodiments of the present disclosure, after disabling the dynamic comment, the method further includes:
in response to a hold-down operation instruction on the video playback interface, displaying a setting interface on the video playback interface, where the setting interface includes a second dynamic comment function switch control; and
in response to a trigger instruction for the second dynamic comment function switch control, enabling the dynamic comment function.

In a second aspect, according to one or more embodiments of the present disclosure, an apparatus for controlling a dynamic comment is provided, and the apparatus includes:
a playback control unit configured to, in response to a video pause instruction, control a video to pause, and display a dynamic comment publishing entrance control on a video playback interface;
a dynamic comment control unit configured to, display a dynamic comment input interface in response to a trigger instruction for the dynamic comment publishing entrance control, wherein the dynamic comment input interface is configured for inputting content of a dynamic comment.

According to one or more embodiments of the present disclosure, the playback control unit is further configured to:
in response to a video playback instruction, play the video, and hide the dynamic comment publishing entrance control on the video playback interface.

According to one or more embodiments of the present disclosure, when in response to a video pause instruction, pausing the video, and displaying the dynamic comment publishing entrance control on the video playback interface, the playback control unit is configured to:
in response to the video pause instruction and a dynamic comment function being enabled during playing the video, pause the video and display the dynamic comment publishing entrance control on the video playback interface.

According to one or more embodiments of the present disclosure, the playback control unit is further configured to:
in response to a trigger instruction for any target dynamic comment, display a dynamic comment interaction control in a preset area around the target dynamic comment, wherein the dynamic comment interaction control includes a dynamic comment disabling control; and
in response to a trigger instruction for the dynamic comment disabling control, disable the dynamic comment function.

According to one or more embodiments of the present disclosure, the dynamic comment interaction control further includes a dynamic comment blocking control; and the dynamic comment control unit is further configured to:
in response to a trigger instruction for the dynamic comment blocking control, hide the target dynamic comment.

According to one or more embodiments of the present disclosure, the playback control unit is further configured to:
disable the dynamic comment function, in response to one of the following instructions on any target dynamic comment: a hold-down operation instruction or a double-click operation instruction.

According to one or more embodiments of the present disclosure, after controlling the video to pause, the playback control unit is further configured to display the first dynamic comment function switch control on the video playback interface;
the dynamic comment control unit is further configured to, disable the dynamic comment function in response to a trigger instruction for the first dynamic comment function switch control.

According to one or more embodiments of the present disclosure, after disabling the dynamic comment function, the dynamic comment control unit is further configured to:
in response to a hold-down operation instruction on the video playback interface, display a setting interface on the video playback interface, wherein the setting interface includes a second dynamic comment function switch control; and
in response to a trigger instruction for the second dynamic comment function switch control, enable the dynamic comment function.

In a third aspect, according to one or more embodiments of the present disclosure, an electronic device is provided, and the electronic device includes: at least one processor and a memory;
the memory stores a computer executable instruction; and
the at least one processor executes the computer executable instruction stored in the memory, such that the at least one processor implements the method for controlling video dynamic comment described in the first aspect and various possible designs of the first aspect above.

In a fourth aspect, according to one or more embodiments of the present disclosure, a computer-readable storage medium with a computer executable instruction stored thereon is provided, when the computer executable instruction being executed by a processor, implements the method for controlling video dynamic comment described in the first aspect and various possible designs of the first aspect above.

In a fifth aspect, according to one or more embodiments of this disclosure, a computer program product including a computer executable instruction is provided, where the computer executable instruction, when being executed by a processor, implements the method for controlling video dynamic comment described in the first aspect and various possible designs of the first aspect above.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above.

## Claims

1. A method for controlling video dynamic comment, comprising:
in response to a video pause instruction, pausing a video and presenting a dynamic comment publishing entrance control on a video playback interface; and
displaying a dynamic comment input interface in response to a trigger instruction for the dynamic comment publishing entrance control, wherein the dynamic comment input interface is configured for inputting content of a dynamic comment.

2. The method according to claim 1, further comprising:
in response to a video playback instruction, playing the video, and hiding the dynamic comment publishing entrance control on the video playback interface.

3. The method according to claim 1, wherein in response to the video pause instruction, pausing the video and displaying the dynamic comment publishing entrance control on the video playback interface comprises:
in response to the video pause instruction and a dynamic comment function being enabled during playing the video, pausing the video and presenting the dynamic comment publishing entrance control on the video playback interface.

4. The method according to claim 1, further comprising:
in response to a trigger instruction for any target dynamic comment, displaying a dynamic comment interaction control in a preset area around the target dynamic comment, wherein the dynamic comment interaction control comprises a dynamic comment function disabling control; and
in response to a trigger instruction for the dynamic comment function disabling control, disabling the dynamic comment function.

5. The method according to claim 4, wherein the dynamic comment interaction control further comprises a dynamic comment blocking control; and the method further comprises:
in response to a trigger instruction for the dynamic comment blocking control, hiding the target dynamic comment.

6. The method according to claim 1, further comprising:
disabling a dynamic comment function, in response to one of the following instructions on any target dynamic comment: a hold-down operation instruction or a double-click operation instruction.

7. The method according to claim 1, wherein after pausing the video, the method further comprises:
displaying a first dynamic comment function switch control on the video playback interface; and
in response to a trigger instruction for the first dynamic comment function switch control, disabling a dynamic comment function.

8. The method according to any one of claims 4 to 7, wherein after disabling the dynamic comment function, the method further comprises:
in response to a hold-down operation instruction on the video playback interface, displaying a setting interface on the video playback interface, wherein the setting interface comprises a second dynamic comment function switch control; and
in response to a trigger instruction for the second dynamic comment function switch control, enabling the dynamic comment function.

9. An apparatus for controlling video dynamic comment, comprising:
a playback control unit configured to, in response to a video pause instruction, pause a video, and display a dynamic comment publishing entrance control on a video playback interface; and
a dynamic comment control unit configured to, display a dynamic comment input interface in response to a trigger instruction for the dynamic comment publishing entrance control, wherein the dynamic comment input interface is configured for inputting content of a dynamic comment.

10. An electronic device, comprising: at least one processor and a memory, wherein, the memory stores a computer executable instruction; and
the at least one processor executes the computer executable instruction stored in the memory, such that the at least one processor implements the method according to any one of claims 1 to 8.

11. A computer-readable storage medium with a computer executable instruction stored thereon,
wherein a processor, when executing the computer executable instruction, implements the method according to any one of claims 1 to 8.

12. A computer program product comprising a computer executable instruction, wherein a processor, when executing the computer executable instruction, implements the method according to any one of claims 1 to 8.
